# FASCICULE DE BREVET EUROPEEN

(11) **EP 2 929 307 B1**
(45) Date de publication et mention de la délivrance du brevet: **02.01.2019**
(21) Numéro de dépôt: 13808131.0
(22) Date de dépôt: 29.11.2013
(51) Int. Cl.: G01J 3/02, G01J 3/18, G01J 3/447, G02B 5/18, G02B 27/28

(54) **SPECTROMÈTRE POUR L'ANALYSE DU SPECTRE D'UN FAISCEAU LUMINEUX**
SPEKTROMETER ZUR SPEKTRENANALYSE EINES LICHTSTRAHLS
SPECTROMETER FOR ANALYSING THE SPECTRUM OF A LIGHT BEAM

(30) Priorité: 04.12.2012 FR 1261625
(43) Date de publication de la demande: 14.10.2015
(73) Titulaire: Horiba France SAS, 91160 Longjumeau (FR)
(72) Inventeur: ACHER, Olivier, F-91190 Gif-sur-Yvette (FR); RICHARD, Simon, 91120 Palaiseau (FR); BRACH, Christian, F-78730 Saint Arnoult en Yvelynes (FR); MILLET, Viviane, F-91310 Linas (FR); CORDE, Sébastien, F-75018 Paris (FR); HERAN, Daphné, 34090 Montpellier (FR)
(74) Mandataire: Jacobacci Coralis Harle
(86) Numéro de dépôt international: PCT/FR2013/052900
(87) Numéro de publication internationale: WO 2014/087081

(56) Documents cités:
- DE-A1- 19 539 004
- DE-A1-102005 055 679
- PROVENZANO C ET AL: "Method for artifact-free circular dichroism measurements based on polarization grating", OPTICS LETTERS, OSA, OPTICAL SOCIETY OF AMERICA, WASHINGTON, DC, US, vol. 35, no. 11, 1 juin 2010 (2010-06-01), pages 1822-1824, XP001554372, ISSN: 0146-9592, DOI: 10.1364/OL.35.001822 [extrait le 2010-05-24]
- JIHWAN KIM ET AL: "Snapshot imaging spectropolarimeter utilizing polarization gratings", PROCEEDINGS OF SPIE, 1 janvier 2008 (2008-01-01), page 708603, XP055020635, ISSN: 0277-786X, DOI: 10.1117/12.795719
- ELENA NICOLESCU AND MICHAEL J ESCUTI: "Compact spectrophotometer using polarization-independent liquid crystal tunable optical filters", PROCEEDINGS OF SPIE, S P I E - INTERNATIONAL SOCIETY FOR OPTICAL ENGINEERING, US , vol. 6661 1 janvier 2007 (2007-01-01), page 666105, XP007921936, ISSN: 0277-786X, DOI: 10.1117/12.735152 Extrait de l'Internet: URL:http://www.ece.ncsu.edu/oleg/files-wik i/5/56/SPIE07Nicolescu-LCPG_spectrometer.p df
- NELSON V TABIRYAN ET AL: "The promise of diffractive waveplates", OPTICS AND PHOTONICS NEWS, OSA, WASHINGTON, DC, US, vol. 21, no. 3, 1 janvier 2010 (2010-01-01), pages 40-45, XP007921937, ISSN: 1047-6938, DOI: 10.1364/OPN.21.3.000040

## Description

L'invention concerne le domaine de la métrologie optique.

Elle concerne plus particulièrement un spectromètre à forte efficacité de diffraction pour l'analyse du spectre d'un faisceau lumineux ou d'une source lumineuse.

La présente invention trouve une application particulièrement avantageuse lorsqu'une haute efficacité du spectromètre sur une large bande spectrale est recherchée.

En métrologie optique, la spectroscopie est une technique qui consiste à analyser le spectre d'un faisceau lumineux amont, que celui-ci soit issu directement d'une source de lumière ou qu'il provienne d'un objet éclairé par une source de lumière, et à en déduire certaines propriétés de cette source ou de cet objet.

Un spectromètre est un instrument optique permettant de réaliser une telle analyse pour un spectre comprenant une pluralité de longueurs d'onde.

Il est bien connu qu'un spectromètre comporte généralement :
- une fente d'entrée laissant traverser le faisceau lumineux amont,
- des moyens de collimation générant, à partir du faisceau lumineux amont, un faisceau lumineux collimaté,
- des moyens de dispersion angulaire interceptant le faisceau lumineux collimaté et dispersant angulairement le faisceau lumineux collimaté en fonction d'une pluralité de longueurs d'onde,
- des moyens de détection adaptés à mesurer des intensités lumineuses en fonction de la pluralité de longueurs d'onde.

Dans de nombreuses applications, comme par exemple la spectroscopie Raman ou la spectroscopie dans le domaine proche infrarouge, la quantité de lumière disponible dans le spectromètre, au niveau des moyens de détection, pour l'analyse du spectre est faible. En effet, un spectromètre transporte l'ensemble des photons du faisceau lumineux amont depuis la fente d'entrée jusqu'aux moyens de détection avec de nombreuses pertes, dues notamment aux moyens de dispersion angulaire.

Par ailleurs, même si les moyens de dispersion angulaire peuvent être optimisés afin de réduire les pertes dans un tel spectromètre, ceci ne peut se faire que sur une bande spectrale étroite.

Ainsi, une mesure rapide ou précise avec un tel spectromètre peut s'avérer difficile, sauf à utiliser des moyens de détection performants mais coûteux.

On connaît par exemple des documents US2010/0225856A1 et US2010/0225876A1 des moyens de dispersion angulaire comprenant des réseaux de diffraction à séparation de polarisation, dits achromatiques, qui présentent une très haute efficacité de diffraction dans les ordres de diffraction +1 et -1 sur une large bande spectrale, notamment dans le domaine des longueurs d'onde ultraviolette, visible et infrarouge.

D'autre part, on connaît de l'article C. Oh and M.J. Escuti, « Achromatic polarization gratings as highly efficient thin-film polarizing beamsplitters for broadband light", Proceedings of SPIE, vol. 6682, no. 668211 (2007) de tels réseaux de diffraction à séparation de polarisation achromatiques pouvant être utilisés dans un spectromètre.

D'autres documents pertinents sont les articles "Method for artifact-free circular dichroism measurements based on polarization grating" de C. Provenzano et al., Optics Letters, June 2010; "Snapshot imaging spectropolarimeter utilizing polarization gratings" de J. Kim et M. J. Escuti, Imaging Spectrometry XIII, Proc. of SPIE Vol. 7086; "Compact spectrophotometer using polarization-independent liquid crystal tunable optical filters" de E. Nicolescu et M. J. Escuti, Imaging Spectrometry XII, Proc. of SPIE 6661; "The promise of diffractive waveplates" de N. V. Tabiryan et al, Optics & Photonics News, March 2010; ainsi que les documents de brevets DE102005055679 et DE19539004.

Cependant, par construction, un réseau de diffraction à séparation de polarisation fonctionne comme un séparateur de polarisation. De ce fait, les performances de mesure d'un spectromètre utilisant un tel composant ne sont pas uniformes en fonction de l'état de polarisation du faisceau lumineux amont, les intensités lumineuses mesurées par les moyens de détection variant avec les fluctuations de l'état de polarisation du faisceau lumineux amont.

Un des buts de l'invention est de proposer un spectromètre dont les moyens de dispersion angulaire présentent une très haute efficacité sur une large bande spectrale, permettant de transporter avec un minimum de pertes l'ensemble des photons du faisceau lumineux amont depuis la fente d'entrée jusqu'aux moyens de détection.

Un autre but de l'invention est de proposer un spectromètre ayant une efficacité de dispersion indépendante de l'état de polarisation du faisceau lumineux à analyser.

Un autre but de l'invention est de proposer un spectromètre offrant une plus grande rapidité et une meilleure précision de mesure pour l'analyse du spectre du faisceau lumineux amont.

Afin de remédier à l'inconvénient précité de l'état de la technique, la présente invention propose un spectromètre présentant des performances améliorées sur une large bande spectrale.

À cet effet, l'invention concerne un spectromètre pour l'analyse du spectre d'un faisceau lumineux amont comportant :
- une fente d'entrée adaptée à laisser traverser ledit faisceau lumineux amont,
- des moyens de collimation adaptés à générer, à partir dudit faisceau lumineux amont, un faisceau lumineux collimaté, et
- des moyens de dispersion angulaire disposés de manière à intercepter ledit faisceau lumineux collimaté et à disperser angulairement ledit faisceau lumineux collimaté en fonction d'une pluralité de longueurs d'onde,
dans lequel :
- lesdits moyens de dispersion angulaire comprennent au moins un réseau de diffraction à séparation de polarisation qui présente une normale au réseau, ledit réseau de diffraction à séparation de polarisation étant adapté à diffracter ledit faisceau lumineux collimaté en :
   - au moins un premier faisceau lumineux diffracté selon un premier ordre de diffraction qui est soit l'ordre de diffraction +1, soit l'ordre de diffraction -1 dudit réseau de diffraction à séparation de polarisation, ledit premier faisceau lumineux diffracté étant diffracté angulairement en fonction de ladite pluralité de longueurs d'onde et présentant un premier état de polarisation qui est circulaire, et
   - un deuxième faisceau lumineux diffracté selon un deuxième ordre de diffraction qui est soit l'ordre de diffraction +1, soit l'ordre de diffraction -1 dudit réseau de diffraction à séparation de polarisation, ledit deuxième ordre de diffraction étant différent dudit premier ordre de diffraction, ledit deuxième faisceau lumineux diffracté étant diffracté angulairement en fonction de ladite pluralité de longueurs d'onde et présentant un deuxième état de polarisation qui est circulaire et orthogonal audit premier état de polarisation, et comportant :
- des moyens optiques de recombinaison agencés au moins sur un trajet optique dudit deuxième faisceau lumineux diffracté, en aval dudit réseau de diffraction à séparation de polarisation, lesdits moyens optiques de recombinaison comprenant au moins une surface plane de réflexion optique parallèle à ladite normale au réseau qui est adaptée à dévier au moins ledit deuxième faisceau lumineux diffracté, et
- des moyens de focalisation adaptés pour focaliser, pour chaque longueur d'onde de ladite pluralité de longueurs d'onde, ledit premier faisceau lumineux diffracté et ledit deuxième faisceau lumineux diffracté sur une même surface de focalisation.

Le spectromètre selon l'invention combine donc au moins un réseau de diffraction à séparation de polarisation, des moyens de focalisation et des moyens optiques de recombinaison pour atteindre de meilleures performances sur une large bande spectrale.

Un tel réseau de diffraction à séparation de polarisation, décrit par exemple dans les documents US2010/0225856A1 et US2010/0225876A1, présente une très haute efficacité de diffraction dans les ordres de diffraction +1 et -1 sur une large bande spectrale, notamment dans le domaine des longueurs d'onde ultraviolette, visible et infrarouge.

Le spectromètre selon l'invention permet donc d'exploiter la très haute efficacité de diffraction du réseau de diffraction à séparation de polarisation sur une large bande spectrale grâce aux moyens optiques de recombinaison qui permettent, par exemple au niveau de la surface de focalisation, la recombinaison des faisceaux lumineux diffractés par le réseau de diffraction à séparation de polarisation.

L'utilisation combinée d'un réseau de diffraction à séparation de polarisation dont la somme des efficacités de diffraction dans l'ordre de diffraction +1 et dans l'ordre de diffraction -1 est proche de 100 % pour chaque longueur d'onde de la pluralité de longueurs d'onde du spectre du faisceau lumineux amont et de moyens optiques de recombinaison du premier faisceau lumineux diffracté et du deuxième faisceau lumineux diffracté permet de collecter sur la surface de focalisation près de 100 % de l'intensité lumineuse du faisceau lumineux amont à chaque longueur d'onde.

Grâce aux moyens de focalisation, les faisceaux lumineux, diffractés par le réseau de diffraction à séparation de polarisation et recombinés par les moyens optiques de recombinaison à une longueur d'onde, sont focalisés sur la surface de focalisation en un point de focalisation qui est spatialement séparé du point de focalisation en lequel sont focalisés les faisceaux lumineux diffractés par le réseau de diffraction à séparation de polarisation et recombinés par les moyens optiques de recombinaison à une autre longueur d'onde.

Ainsi, le spectromètre selon l'invention transporte, presque sans perte, le faisceau lumineux amont jusqu'à la surface de focalisation.

Le spectromètre selon l'invention est particulièrement avantageux dans la mesure où un nombre réduit de réseau de diffraction à séparation de polarisation est nécessaire pour couvrir une gamme de longueur d'onde relativement large. Ceci permet notamment de réduire le coût d'un tel spectromètre.

Dans le cas particulier où un seul réseau de diffraction à séparation de polarisation est nécessaire, cela permet de ne pas introduire d'erreur dans la mesure, les moyens de dispersion angulaire pouvant être fixes dans le spectromètre sur l'ensemble de la gamme de mesure.

Par ailleurs, d'autres caractéristiques avantageuses et non limitatives du dispositif selon l'invention sont les suivantes :
- ledit réseau de diffraction à séparation de polarisation est plan et présente des traits rectilignes et parallèles ;
- ladite surface plane de réflexion optique est parallèle auxdits traits du réseau de diffraction à séparation de polarisation, de sorte que ledit premier faisceau lumineux diffracté et ledit deuxième faisceau lumineux diffracté soient focalisés, pour chaque longueur d'onde de ladite pluralité de longueurs d'onde, par lesdits moyens de focalisation en un même point de focalisation de ladite surface de focalisation, lesdits points de focalisation étant séparés sur ladite surface de focalisation en fonction de ladite pluralité de longueurs d'onde ;
- ladite surface plane de réflexion optique forme avec lesdits traits du réseau de diffraction à séparation de polarisation un angle compris entre 0° et 90°, de sorte que ledit premier faisceau lumineux diffracté et ledit deuxième faisceau lumineux diffracté soient focalisés, pour chaque longueur d'onde de ladite pluralité de longueurs d'onde, par lesdits moyens de focalisation en deux points distincts de focalisation de ladite surface de focalisation, lesdits deux points distincts de focalisation étant séparés sur ladite surface de focalisation ;
- ledit spectromètre comporte une fente de sortie, fixe ou mobile, disposée sur ladite surface de focalisation et adaptée à laisser traverser lesdits faisceaux lumineux diffractés recombinés par lesdits moyens de focalisation sur ladite surface de focalisation ;
- ledit spectromètre comporte des moyens de détection disposés sur ladite surface de focalisation et adaptés à délivrer, pour chaque longueur d'onde de ladite pluralité de longueurs d'onde, un signal relatif à la somme de l'intensité lumineuse diffractée à ladite longueur d'onde dans l'ordre de diffraction +1 et de l'intensité lumineuse diffractée à ladite longueur d'onde dans l'ordre de diffraction -1 ;
- lesdits moyens optiques de recombinaison comportent un miroir plan disposé de manière à réfléchir, pour chaque longueur d'onde de ladite pluralité de longueurs d'onde, ledit deuxième faisceau lumineux diffracté dans une direction parallèle audit premier faisceau lumineux diffracté ;
- lesdits moyens optiques de recombinaison comportent un prisme comprenant une base, une face d'entrée et une face de sortie inclinée par rapport à la face d'entrée, ladite face d'entrée et ladite face de sortie réfractant, pour chaque longueur d'onde de ladite pluralité de longueurs d'onde, ledit premier faisceau lumineux diffracté et ledit deuxième faisceau lumineux diffracté, ledit deuxième faisceau lumineux diffracté étant dévié, pour chaque longueur d'onde de ladite pluralité de longueurs d'onde, par réflexion sur ladite base du prisme entre ladite face d'entrée et ladite face de sortie ;
- lesdits moyens optiques de recombinaison comportent :
   - une lame à retard quart d'onde disposée en sortie du réseau de diffraction à séparation de polarisation, ladite lame à retard quart d'onde étant adaptée à modifier ledit premier état de polarisation et ledit deuxième état de polarisation pour transformer leurs états de polarisation circulaires orthogonaux en des états de polarisation linéaires qui sont orthogonaux entre eux,
   - un premier miroir et un deuxième miroir disposés parallèlement pour se faire face mutuellement et perpendiculairement audit réseau de diffraction à séparation de polarisation de sorte que ledit premier miroir, respectivement ledit deuxième miroir, réfléchisse, pour chaque longueur d'onde de ladite pluralité de longueurs d'onde, ledit premier faisceau lumineux diffracté, respectivement ledit deuxième faisceau lumineux diffracté, et
   - un cube recombineur de polarisation présentant une interface de recombinaison et placé entre ledit premier miroir et ledit deuxième miroir de sorte que ledit premier faisceau lumineux diffracté réfléchi par ledit premier miroir soit incident sur une première face d'entrée dudit cube recombineur de polarisation et que ledit deuxième faisceau lumineux diffracté réfléchi par ledit deuxième miroir soit incident sur une deuxième face d'entrée dudit cube recombineur de polarisation, l'un desdits faisceaux lumineux diffractés réfléchis étant réfléchi par ladite interface de recombinaison et l'autre faisceau lumineux diffracté réfléchi étant transmis par ladite interface de recombinaison, ledit premier faisceau lumineux diffracté et ledit deuxième faisceau lumineux diffracté étant parallèles en sortie dudit cube recombineur de polarisation ;
- lesdits moyens de collimation comprennent un système optique de collimation présentant une ouverture numérique de collimation et lesdits moyens de focalisation comprennent un système optique de focalisation présentant une ouverture numérique de focalisation qui est au moins égale au double de ladite ouverture numérique de collimation ;
- lesdits moyens de détection comportent un détecteur multi-canal ;
- lesdits moyens de détection comportent une fente mobile et un détecteur mono-canal ;
- ledit spectromètre comporte une cellule de fluorescence et des moyens de mesure, ladite cellule de fluorescence étant disposée en aval de ladite fente de sortie de manière à être illuminée par lesdits faisceaux lumineux diffractés recombinés et à émettre un signal de fluorescence, lesdits moyens de mesure étant adaptés à mesurer l'intensité lumineuse dudit signal de fluorescence.

Plusieurs modes de réalisation de l'invention sont décrits en détail en référence aux dessins dans lesquels :
- la figure 1 est une vue schématique d'un spectromètre selon un premier mode de réalisation où le réseau de diffraction à séparation de polarisation fonctionne en transmission et où les moyens optiques de recombinaison comprennent un miroir plan ;
- la figure 1A est une vue schématique selon le plan A-A de la figure 1 montrant le miroir plan et les traits du réseau de diffraction à séparation de polarisation de la figure 1 ;
- la figure 2 est une vue schématique d'un spectromètre selon une première variante du premier mode de réalisation où le réseau de diffraction à séparation de polarisation fonctionne en réflexion et où les moyens optiques de recombinaison comprennent un miroir plan ;
- la figure 3 est une vue schématique d'un spectromètre selon une deuxième variante du premier mode de réalisation où le réseau de diffraction à séparation de polarisation fonctionne en transmission et où les moyens optiques de recombinaison comprennent un prisme ;
- la figure 4 est une vue schématique d'un spectromètre selon une troisième variante du premier mode de réalisation où le réseau de diffraction à séparation de polarisation fonctionne en transmission et où les moyens optiques de recombinaison comprennent une lame quart d'onde, deux miroirs et un cube recombineur de polarisation ;
- la figure 5 est une vue schématique d'un spectromètre selon un deuxième mode de réalisation utilisé en monochromateur et comprenant une cellule de fluorescence ;
- la figure 6 est une vue schématique d'un spectromètre selon un troisième mode de réalisation utilisé en spectropolarimètre.

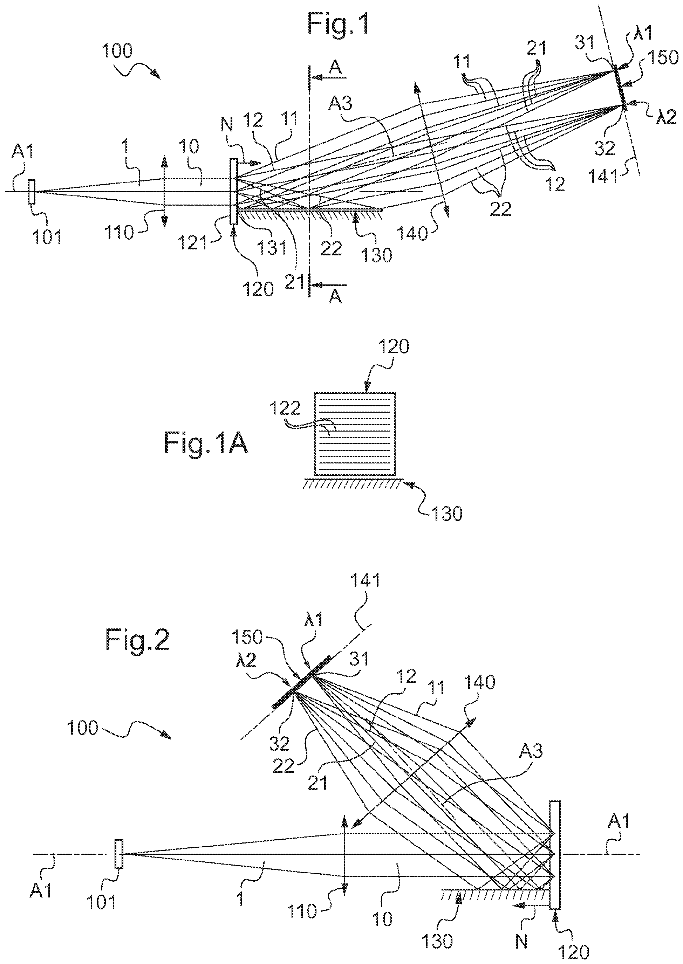

On a représenté sur la figure 1 un premier mode de réalisation d'un spectromètre 100 selon l'invention, destiné à analyser le spectre d'un faisceau lumineux amont 1.

Les figures 2 à 4 sont relatives à plusieurs variantes du premier mode de réalisation d'un spectromètre 100.

Par souci de simplification et pour illustrer les exemples de l'invention, on considérera dans la suite de la description deux longueurs d'onde particulières du spectre du faisceau lumineux amont 1 pour lesquelles l'intensité lumineuse est non nulle.

On notera ces deux longueurs d'onde particulières λ1 et λ2.

Cette considération n'est en rien limitative et ne présume pas ni de la nature précise du spectre du faisceau lumineux amont 1, qui peut être par exemple un spectre continu, discret, à bandes, à raies ou un mélange de tous ces types de spectre, ni de son étendue spectrale.

Sans limitation non plus, on considérera que le faisceau lumineux amont 1 est non polarisé. En effet, sans connaissance de l'état de polarisation du faisceau lumineux amont 1, ce cas est le moins restrictif. On comprendra d'ailleurs à la lumière des exemples, l'intérêt de l'invention vis-à-vis de cette méconnaissance *a priori* de l'état de polarisation du faisceau lumineux amont 1.

De manière générale, le spectromètre 100 comprend, dans le premier mode de réalisation et dans ses variantes, une fente d'entrée 101, des moyens de collimation 110, des moyens de dispersion angulaire 120 et des moyens de détection 150. Les différents éléments précités du spectromètre 100 sont inclus dans un bâti (non représenté) opaque à la lumière extérieure, la fente d'entrée 101 étant située sur l'une des parois de ce bâti.

La fente d'entrée 101 est ici une fente plane de forme rectangulaire, centrée sur un axe optique A1 qui est perpendiculaire au plan de la fente d'entrée 101.

On considérera dans les différents modes de réalisation que le faisceau lumineux amont 1 est approximativement un faisceau lumineux divergent formé d'un cône de rayons lumineux, comprenant des rayons lumineux aux longueurs d'onde λ1 et λ2, le cône étant de révolution autour de l'axe optique A1 et ayant pour sommet le centre de la fente d'entrée 101.

Ainsi disposée, la fente d'entrée 101 laisse traverser le faisceau lumineux amont 1.

Le spectromètre 100 comporte également des moyens de collimation 110 qui comprennent ici un système optique de collimation présentant une ouverture numérique de collimation.

Le système optique de collimation 110 présente ici un axe optique qui est confondu avec l'axe optique A1 et dont le foyer objet est situé au centre de la fente d'entrée 101.

De manière avantageuse, le système optique de collimation 110 est corrigé de l'aberration chromatique au moins sur l'étendue spectrale du faisceau lumineux amont 1.

Ainsi positionnés le long de l'axe optique A1, les moyens de collimation 110 génèrent, à partir du faisceau lumineux amont 1, un faisceau lumineux collimaté 10.

Le faisceau lumineux collimaté 10 est donc formé de rayons lumineux aux longueurs d'onde λ1 et λ2, parallèles entre eux et à l'axe optique A1.

Le spectromètre 100 comporte en outre des moyens de dispersion angulaire 120 placés en aval des moyens de collimation 110 le long de l'axe optique A1.

Les moyens de dispersion angulaire 120 interceptent le faisceau lumineux collimaté 10 de sorte que tous les rayons lumineux aux longueurs d'onde λ1 et λ2 du faisceau lumineux collimaté 10 soient tous incidents sur les moyens de dispersion angulaire 120 selon le même angle d'incidence.

Les moyens de dispersion angulaire 120 dispersent angulairement le faisceau lumineux collimaté 10 en fonction de la longueur d'onde.

On entend par là que les moyens de dispersion angulaire 120 génèrent, à partir du faisceau lumineux collimaté 10 aux longueurs d'onde λ1 et λ2 :
- au moins un faisceau lumineux diffracté à la longueur d'onde λ1, et
- au moins un faisceau lumineux diffracté à la longueur d'onde λ2 qui est séparé angulairement du faisceau lumineux diffracté à la longueur d'onde λ1.

Dans le premier mode de réalisation et dans ses variantes, le spectromètre 100 comporte enfin des moyens de détection 150 placés sur le chemin optique des faisceaux lumineux diffractés.

Pour analyser le spectre du faisceau lumineux amont 1, ces moyens de détection 150 mesurent l'intensité lumineuse du faisceau lumineux diffracté à la longueur d'onde λ1 et l'intensité lumineuse du faisceau lumineux diffracté à la longueur d'onde λ2.

Selon l'invention, les moyens de dispersion angulaire 120 comprennent au moins un réseau de diffraction à séparation de polarisation.

De manière générale, un réseau de diffraction diffracte un rayon lumineux incident en un ou plusieurs rayons diffractés se propageant dans des directions différentes.

En référence à la loi des réseaux de diffraction, on parle alors d'ordres de diffraction tels que l'ordre 0 et les ordres supérieurs : ordres ±1, ordres ±2, *etc...*

Il est bien connu des lois de l'optique physique que lorsqu'ils existent tous les deux, les rayons diffractés dans les ordres de diffraction +1 et -1 se propagent dans deux directions symétriques par rapport à la direction de propagation du rayon diffracté dans l'ordre de diffraction 0.

Il est également connu qu'un réseau de diffraction plan et présentant des traits rectilignes et parallèles espacés régulièrement est tel qu'un faisceau de rayons lumineux incidents parallèles est diffracté en un ou plusieurs faisceaux lumineux diffractés de rayons lumineux parallèles.

Un réseau de diffraction à séparation de polarisation est généralement un composant holographique formé d'au moins une lame d'onde diffractive (« *diffractive waveplate »* en anglais) à cristaux liquides.

Un réseau de diffraction à séparation de polarisation présente la particularité de diffracter un rayon lumineux incident en au moins un rayon diffracté dans l'ordre de diffraction +1 et un rayon diffracté dans l'ordre de diffraction -1, les deux rayons diffractés étant polarisés circulairement et orthogonalement. Par exemple, si le rayon diffracté dans l'ordre de diffraction +1 est polarisé circulairement à gauche, alors le rayon diffracté dans l'ordre de diffraction -1 est polarisé circulairement à droite, et *vice versa.*

Cette particularité existe que le rayon lumineux incident soit non polarisé ou polarisé de manière quelconque. En effet, l'état de polarisation du rayon lumineux incident ne régit que la répartition de l'énergie lumineuse dans l'ordre de diffraction +1 et dans l'ordre de diffraction -1.

De façon préférée, un réseau de diffraction à séparation de polarisation présente d'ailleurs, sur la gamme de longueur d'onde pour laquelle il a été conçu, par exemple sur la plage 400 nm - 800 nm ou sur la plage 800 nm - 2000 nm, des efficacités de diffraction dans l'ordre de diffraction +1 et dans l'ordre de diffraction -1 telles que leur somme soit proche de 100%, typiquement supérieure ou égale à 90%, et de façon préférentielle supérieure ou égale à 95%.

En effet, non seulement une partie de la lumière incidente sur un réseau de diffraction à séparation de polarisation n'est pas diffractée - elle est soit rétroréfléchie, soit absorbée, soit diffusée -, mais aussi une partie de la lumière incidente sur un réseau de diffraction à séparation de polarisation peut être diffractée dans l'ordre de diffraction 0.

Sans limitation, on considérera dans la suite de la description que le réseau de diffraction à séparation de polarisation 120 du spectromètre 100 selon l'invention est ici un réseau de diffraction plan qui présente une normale N au réseau telle que représentée sur les figures 1 à 4.

De manière avantageuse, la normale N est ici parallèle à l'axe optique A1 de sorte que le réseau de diffraction à séparation de polarisation 120 est dans les quatre modes de réalisation représentés sur les figures 1 à 4 placé perpendiculairement à l'axe optique A1 de telle manière que le faisceau lumineux collimaté 10 est en incidence normale sur une face d'entrée 121 du réseau de diffraction à séparation de polarisation 120.

Par analogie avec un réseau de diffraction classique, tel que celui décrit précédemment, on considérera également ici que le réseau de diffraction à séparation de polarisation 120 présente des traits 122 rectilignes et parallèles, régulièrement espacés les uns des autres (voir figure 1A). Ces traits 122 ne sont pas des reliefs mais correspondent à des lignes d'égale orientation des cristaux liquides constituant la lame d'onde diffractive du réseau de diffraction à séparation de polarisation 120.

Ainsi conçu, un rayon lumineux du faisceau lumineux collimaté 10 incident sur le réseau de diffraction à séparation de polarisation 120 est diffracté en des rayons diffractés qui sont tous coplanaires et contenus dans un plan de diffraction du réseau de diffraction à séparation de polarisation 120.

Ce plan de diffraction est le plan qui contient le rayon lumineux incident et qui est perpendiculaire aux traits 122 du réseau de diffraction à séparation de polarisation 120. Le plan de diffraction est donc tel que la normale N au réseau est parallèle à ce plan de diffraction.

Le comportement optique d'un réseau de diffraction à séparation de polarisation tel qu'il vient d'être décrit plus haut reste valable pour n'importe quelle longueur d'onde pour laquelle le réseau de diffraction à séparation de polarisation a été conçu.

Dépendent de la longueur d'onde : les directions de propagation des rayons diffractés et les efficacités de diffraction dans les différents ordres de diffraction.

Ne dépend pas de la longueur d'onde : le caractère « gauche » ou « droite » de la polarisation des rayons diffractés dans les ordres de diffraction +1 et -1, c'est-à-dire que deux rayons à deux longueurs d'onde différentes diffractés dans l'ordre de diffraction +1 sont polarisés circulairement dans le même sens (par exemple gauche), les deux rayons diffractés dans l'ordre de diffraction -1 à ces deux longueurs d'onde étant également polarisés circulairement dans le même sens (ici droite) et avec une polarisation orthogonale.

On comprendra ainsi que le réseau de diffraction à séparation de polarisation 120 du spectromètre 100 selon l'invention diffracte le faisceau lumineux collimaté 10 en :
- au moins un premier faisceau lumineux diffracté 11,12 selon un premier ordre de diffraction qui est soit l'ordre de diffraction +1, soit l'ordre de diffraction -1 du réseau de diffraction à séparation de polarisation 120, le premier faisceau lumineux diffracté 11, 12 étant diffracté angulairement en fonction de la pluralité de longueurs d'onde et présentant un premier état de polarisation qui est circulaire, et
- un deuxième faisceau lumineux diffracté 21, 22 selon un deuxième ordre de diffraction qui est soit l'ordre de diffraction +1, soit l'ordre de diffraction -1 dudit réseau de diffraction à séparation de polarisation 120, ledit deuxième ordre de diffraction étant différent dudit premier ordre de diffraction, le deuxième faisceau lumineux diffracté 21, 22 étant diffracté angulairement en fonction de la pluralité de longueurs d'onde et présentant un deuxième état de polarisation qui est circulaire et orthogonal au premier état de polarisation.

Sans limitation, on considérera dans les quatre modes de réalisation de l'invention que le premier faisceau lumineux diffracté 11, 12 est diffracté dans l'ordre de diffraction +1 et que le deuxième faisceau lumineux diffracté 21, 22 est diffracté dans l'ordre de diffraction -1.

Ainsi, à la longueur d'onde λ1, le faisceau lumineux collimaté 10 est diffracté en un premier faisceau lumineux diffracté 11 à la longueur d'onde λ1 dans l'ordre de diffraction +1 et en un deuxième faisceau lumineux diffracté 21 à la longueur d'onde λ1 dans l'ordre de diffraction -1.

De la même manière, à la longueur d'onde λ2, le faisceau lumineux collimaté 10 est diffracté en un premier faisceau lumineux diffracté 12 à la longueur d'onde λ2 dans l'ordre de diffraction +1 et en un deuxième faisceau lumineux diffracté 22 à la longueur d'onde λ2 dans l'ordre de diffraction -1.

Sans limitation non plus (voir *supra*), on considérera également que le premier faisceau lumineux diffracté 11 à la longueur d'onde λ1 et le premier faisceau lumineux diffracté 12 à la longueur d'onde λ2 présentent un premier état de polarisation circulaire gauche, et que le deuxième faisceau lumineux diffracté 21 à la longueur d'onde λ1 et le deuxième faisceau lumineux diffracté 22 à la longueur d'onde λ2 présentent un deuxième état de polarisation circulaire droite, qui est donc orthogonal au premier état de polarisation.

Dans les configurations optiques représentées sur les figures 1 à 4, l'ordre de diffraction 0 est parallèle à l'axe optique A1. Ainsi, comme le faisceau lumineux collimaté 10 est en incidence normale sur la face d'entrée 121 du réseau de diffraction à séparation de polarisation 120 (voir *supra*), à la sortie du réseau de diffraction à séparation de polarisation 120, le premier faisceau lumineux diffracté 11 à la longueur d'onde λ1 dans l'ordre de diffraction +1 et le deuxième faisceau lumineux diffracté 21 à la longueur d'onde λ1 dans l'ordre de diffraction -1 sont symétriques par rapport à l'axe optique A1.

De la même manière, à la sortie du réseau de diffraction à séparation de polarisation 120, le premier faisceau lumineux diffracté 12 à la longueur d'onde λ2 dans l'ordre de diffraction +1 et le deuxième faisceau lumineux diffracté 22 à la longueur d'onde λ2 dans l'ordre de diffraction -1 sont symétriques par rapport à l'axe optique A1.

Toujours selon l'invention, le spectromètre 100 comporte également des moyens de focalisation 140.

Dans les quatre variantes, les moyens de focalisation 140 comprennent un système optique de focalisation présentant une ouverture numérique de focalisation et un axe optique de focalisation A3.

De préférence, le système optique de focalisation 140 est ici disposé et orienté dans le spectromètre 100 de telle sorte que son axe optique de focalisation A3 soit coplanaire et sécant avec l'axe optique A1.

Les moyens de focalisation 140 focalisent le premier faisceau lumineux diffracté 11, 12 et le deuxième faisceau lumineux diffracté 21, 22 sur une surface de focalisation qui est par exemple formée d'un plan de focalisation 141.

Dans les différentes variantes du premier mode de réalisation du spectromètre 100 représentées sur les figures 1 à 4, les moyens de détection 150 sont disposés sur la surface de focalisation 141.

Plus précisément ici, les moyens de détection 150 sont des moyens de détection plans dont le plan de détection est dans le plan de focalisation 141 du système optique de focalisation 140.

On détaillera par la suite comment les moyens de détection 150 opèrent dans le spectromètre 100.

Le spectromètre 100 comporte par ailleurs des moyens optiques de recombinaison 130 ; 330 ; 430.

Les moyens optiques de recombinaison 130 ; 330 ; 430 sont agencés au moins sur un trajet optique du deuxième faisceau lumineux diffracté 21, 22, en aval du réseau de diffraction à séparation de polarisation 120.

Dans le premier mode de réalisation et dans ses variantes représentés sur les figures 1 à 4, les moyens optiques de recombinaison 130 ; 330 ; 430 sont agencés entre le réseau de diffraction à séparation de polarisation 120 et les moyens de focalisation 140.

Les moyens optiques de recombinaison 130 ; 330 ; 430 comprennent une surface plane de réflexion optique 130 ; 331 ; 432 qui est parallèle à la normale N au réseau.

De plus, dans le premier mode de réalisation et dans ses variantes représentés sur les figures 1 à 4, la surface plane de réflexion optique 130 ; 331 ; 432 est également parallèle aux traits 122 du réseau de diffraction à séparation de polarisation 120, comme cela est représenté sur la figure 1A.

Ainsi orientés, les moyens optiques de recombinaison 130 ; 330 ; 430 dévient alors au moins le deuxième faisceau lumineux diffracté 21, 22 de telle sorte que le premier faisceau lumineux diffracté 11, 12 et le deuxième faisceau lumineux diffracté 21, 22 soient focalisés par les moyens de focalisation 140 sur la surface de focalisation 141.

Plus précisément, le premier faisceau lumineux diffracté 11, 12 et le deuxième faisceau lumineux diffracté 21, 22 sont focalisés par les moyens de focalisation 140 en un même point de focalisation (31, 32) de la surface de focalisation 141, et donc des moyens de détection 150 pour une longueur d'onde.

Plus précisément encore, le système optique de focalisation 140 focalise :
- le premier faisceau lumineux diffracté 11 à la longueur d'onde λ1 et le deuxième faisceau lumineux diffracté 21 à la longueur d'onde λ1 en un même premier point de focalisation 31 sur la surface de focalisation 141, et donc sur les moyens de détection 150, et
- le premier faisceau lumineux diffracté 12 à la longueur d'onde λ2 et le deuxième faisceau lumineux diffracté 22 à la longueur d'onde λ2 en un même deuxième point de focalisation 32 sur la surface de focalisation 141, et donc sur les moyens de détection 150, ce deuxième point de focalisation 32 étant spatialement séparé du premier point de focalisation 31.

Cette séparation spatiale en fonction de la longueur d'onde des points de focalisation sur la surface de focalisation 141, et donc sur les moyens de détection 150, permet de mesurer séparément l'intensité lumineuse à la longueur d'onde λ1 et l'intensité lumineuse à la longueur d'onde λ2.

Les moyens de détection 150 délivrent donc, pour chacune des deux longueurs d'onde λ1 et λ2, un signal relatif à la somme de l'intensité lumineuse diffractée dans l'ordre de diffraction +1 et de l'intensité lumineuse diffractée à ladite longueur d'onde dans l'ordre de diffraction -1.

Comme indiqué précédemment, la somme des efficacités de diffraction dans l'ordre de diffraction +1 et dans l'ordre de diffraction -1 d'un réseau de diffraction à séparation de polarisation 120 est très élevée.

Grâce à l'utilisation combinée du réseau de diffraction à séparation de polarisation 120, des moyens optiques de recombinaison 130 ; 330 ; 430 et des moyens de focalisation 140, il est possible d'exploiter cette propriété particulière des réseaux de diffraction à séparation de polarisation pour que le spectromètre 100 selon l'invention présente une transmission élevée entre la fente d'entrée 101 et les moyens de détection 150 de manière à améliorer la rapidité et la précision de l'analyse du spectre du faisceau lumineux amont 1.

On décrira plus en détail ci-après les différentes variantes de l'invention précédemment décrite, et en particulier les moyens optiques de recombinaison 130 ; 330 ; 430.

Par ailleurs, afin de simplifier la description, on ne décrira ci-après les différentes variantes que selon une longueur d'onde λ1, étant entendu que le fonctionnement du spectromètre 100, et en particulier de ses moyens optiques de recombinaison 130 ; 330 ; 430, est identique pour chaque longueur d'onde appartenant au spectre du faisceau lumineux amont 1 pour laquelle le spectromètre 100 a été conçu.

On a représenté sur la figure 1 un spectromètre 100 selon un premier mode de réalisation, dans lequel le réseau de diffraction à séparation de polarisation 120 fonctionne en transmission et dans lequel les moyens optiques de recombinaison 130 comportent un miroir plan, la surface plane de réflexion optique des moyens optiques de recombinaison 130 étant formée par la surface réfléchissante du miroir plan.

Ce miroir 130 est disposé en aval du réseau de diffraction à séparation de polarisation 120, entre celui-ci et le système optique de focalisation 140.

Le miroir 130 est placé dans la partie basse du réseau de diffraction à séparation de polarisation 120, vers laquelle le deuxième faisceau lumineux diffracté 21 à la longueur d'onde λ1 se propage.

Le miroir 130 est orienté de telle sorte qu'il soit, d'une part, parallèle à la normale N au réseau de diffraction à séparation de polarisation 120 et, d'autre part, parallèle aux traits 122 du réseau de diffraction à séparation de polarisation 120 (voir notamment figure 1A).

De manière avantageuse, le miroir 130 comprend une arête latérale 131 qui est accolée à la face de sortie 122 du réseau de diffraction à séparation de polarisation 120.

Ainsi positionné et orienté dans le spectromètre 100, le miroir 130 réfléchit le deuxième faisceau lumineux diffracté 21 à la longueur d'onde λ1.

La dimension du miroir 130 selon l'axe optique A1 est choisie suffisamment grande de telle sorte que le miroir 130 réfléchisse, à chaque longueur d'onde, le deuxième faisceau lumineux diffracté 21, 22.

Par réflexion, le miroir 130 dévie le deuxième faisceau lumineux diffracté 21 à la longueur d'onde λ1 de sorte que le deuxième faisceau lumineux diffracté 21 soit parallèle au premier faisceau lumineux diffracté 11 à la longueur d'onde λ1.

Le premier faisceau lumineux diffracté 11 et le deuxième faisceau lumineux diffracté 21 étant parallèles, ils sont focalisés par le système optique de focalisation 140 au premier point de focalisation 31 des moyens de détection 150.

Dans cette configuration optique, le système optique de focalisation 140 doit alors présenter une ouverture numérique de focalisation qui est le double de l'ouverture numérique de collimation du système optique de collimation 110.

Le comportement du spectromètre 100 décrit ci-dessus est également valable pour la longueur d'onde λ2 et le premier faisceau lumineux diffracté 12 à la longueur d'onde λ2 et le deuxième faisceau lumineux diffracté 22 à la longueur d'onde λ2 sont focalisés par le système optique de focalisation 140 au deuxième point de focalisation 32 des moyens de détection 150.

Le premier faisceau lumineux diffracté 12 à la longueur d'onde λ2 n'étant pas diffracté dans la même direction que le premier faisceau lumineux diffracté 11 à la longueur d'onde λ1, le deuxième point de focalisation 32 est spatialement séparé du premier point de focalisation 31. Ceci est d'ailleurs vrai pour chaque longueur d'onde du spectre du faisceau lumineux amont 1.

De plus, le réseau de diffraction à séparation de polarisation 120, le miroir 130 et le système optique de focalisation 140 sont ici agencés dans le spectromètre 100 de telle sorte que les différents points de focalisation sur les moyens de détection 150 sont alignés les uns avec les autres.

Les moyens de détection 150 comportent un détecteur multi-canal formé ici d'une barrette linéaire de capteurs CCD placée de telle sorte que les points de focalisation sont alignés sur la ligne de capteurs CCD.

Le premier point de focalisation 31 et le deuxième point de focalisation 32 sont centrés sur des pixels différents de la barrette linéaire de capteurs CCD de sorte que le détecteur multi-canal 150 délivre :
- un signal relatif à la somme de l'intensité lumineuse diffractée à la longueur d'onde λ1 dans l'ordre de diffraction +1 et de l'intensité lumineuse diffractée à la longueur d'onde λ1 dans l'ordre de diffraction -1, cette somme étant proche de 100% de l'intensité lumineuse du faisceau lumineux amont 1 à la longueur d'onde λ1, et
- un signal relatif à la somme de l'intensité lumineuse diffractée à la longueur d'onde λ2 dans l'ordre de diffraction +1 et de l'intensité lumineuse diffractée à la longueur d'onde λ2 dans l'ordre de diffraction -1, cette somme étant également proche de 100% de l'intensité lumineuse du faisceau lumineux amont 1 à la longueur d'onde λ2.

Ceci étant vrai pour toutes les longueurs d'onde appartenant au spectre du faisceau lumineux amont 1, les moyens de détection 150 mesurent alors, en fonction de la longueur d'onde, les intensités lumineuses du faisceau lumineux amont 1 pour en déduire son spectre.

Il est par ailleurs connu que la résolution spectrale (exprimée en nanomètres) du détecteur multi-canal est notamment fonction de la taille des capteurs CCD et de leur espacement.

De manière générale, la résolution spectrale d'un spectromètre est fonction du pouvoir de dispersion des moyens de dispersion angulaire, des éventuelles aberrations optiques des moyens de collimation et des moyens de focalisation, ainsi que de la résolution spatiale des moyens de détection.

En variante, le détecteur multi-canal pourrait par exemple être formé d'une matrice de capteurs CCD.

En variante encore, les moyens de détection pourraient comporter une fente mobile et un détecteur mono-canal. La fente mobile présente une forme et des dimensions qui sont celles de l'image de la fente d'entrée par le système optique de collimation, le réseau de diffraction à séparation de polarisation et le système optique de focalisation. Le détecteur mono-canal est un détecteur unique, par exemple une photodiode silicium, germanium, InGaAs, InAs, InSb, PbS, PbSe, ou HgCdTe, une photodiode à avalanche, un tube photo-multiplicateur.

La deuxième variante du spectromètre 100, représentée sur la figure 2, présente une architecture semblable à la première variante du spectromètre 100 de la figure 1 sauf que le réseau de diffraction à séparation de polarisation 120 du spectromètre 100 fonctionne en réflexion plutôt qu'en transmission.

De manière analogue à la première variante, le miroir 130 réfléchit le deuxième faisceau lumineux diffracté 21, 22 par le réseau de diffraction à séparation de polarisation 120 aux différentes longueurs d'onde λ1, λ2 du spectre.

Dans ces conditions, il est alors prévu que la distance entre le système optique de collimation 110 et le réseau de diffraction à séparation de polarisation 120 soit suffisante afin que le miroir 130 puisse être disposé entre le réseau de diffraction à séparation de polarisation 120 et le système optique de collimation 110.

De plus, il est également prévu que la distance entre le système optique de collimation 110 et le réseau de diffraction à séparation de polarisation 120 soit assez grande afin que les faisceaux lumineux diffractés 11, 12, 21, 22 ne soient pas interceptés par le système optique de collimation 110.

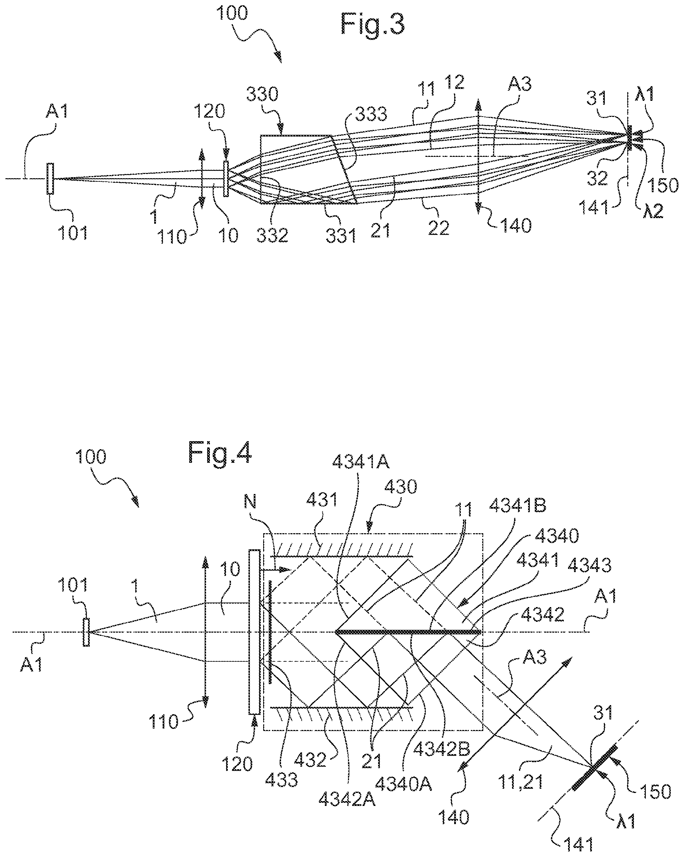

On a représenté sur la figure 3 une deuxième variante du premier mode de réalisation du spectromètre 100 dans lequel le réseau de diffraction à séparation de polarisation 120 fonctionne en transmission et dans lequel les moyens optiques de recombinaison 330 comportent un prisme.

De façon avantageuse, ce prisme 330 est un prisme optique en verre minéral dont les faces sont polies. Il comprend une base 331, une face d'entrée 332 et une face de sortie 333.

La face d'entrée 332 est ici une face plane qui est parallèle au réseau de diffraction à séparation de polarisation 120 (la face d'entrée 332 étant donc perpendiculaire à l'axe optique A1) et qui est centrée sur l'axe optique A1.

La face de sortie 333 du prisme 330 est également une face plane. Elle est inclinée par rapport à la face d'entrée 332.

On décrira ci-après le cheminement du premier faisceau lumineux diffracté 11 à la longueur d'onde λ1 puis le cheminement du deuxième faisceau lumineux diffracté 21 à la longueur d'onde λ1.

Comme représenté sur la figure 3, le premier faisceau lumineux diffracté 11 est incident sur la face d'entrée 332 du prisme 330 et est réfracté par celle-ci.

Le premier faisceau lumineux diffracté 11 se propage alors de manière parallèle dans le prisme 330 puis est incident sur la face de sortie 333 du prisme 330 qui le réfracte à son tour.

Le premier faisceau lumineux diffracté 11 se propage alors toujours de manière parallèle en direction du système optique de focalisation 140, simplement dévié par le prisme 330 par rapport à sa direction initiale en sortie du réseau de diffraction à séparation de polarisation 120.

Toujours selon la figure 3, le deuxième faisceau lumineux diffracté 21 est incident sur la face d'entrée 332 du prisme 330 et est réfracté par celle-ci.

Le premier faisceau lumineux diffracté 11 se propage alors de manière parallèle dans le prisme 330.

Comme le premier faisceau lumineux diffracté 11 et le deuxième faisceau lumineux diffracté 21 sont symétriques par rapport à l'axe optique A1 en sortie du réseau de diffraction à séparation de polarisation 120, avant d'être incidents sur la face d'entrée 332 du prisme 330 pour y être réfractés, et comme la face d'entrée 332 du prisme 330 est perpendiculaire à l'axe optique A1, le premier faisceau lumineux diffracté 11 et le deuxième faisceau lumineux diffracté 21 sont également symétriques après réfraction sur la face d'entrée 332.

La base 331 du prisme 330 étant orientée dans le plan d'incidence de la même manière que le miroir 130 de la figure 1 et étant de cette façon perpendiculaire à la face d'entrée 332, les rayons lumineux parallèles du deuxième faisceau lumineux diffracté 21 sont tous incidents sur la base 331 du prisme 330 avec un angle d'incidence supérieur à l'angle de réflexion totale dans ce prisme 330.

Ainsi, le deuxième faisceau lumineux diffracté 21 est totalement réfléchi sur la base 331 du prisme 330 par réflexion totale interne, entre la face d'entrée 332 et la face de sortie 333. La base 331 du prisme 330 constitue donc, pour la variante de la figure 3, la surface plane de réflexion optique des moyens optiques de recombinaison 330.

Le deuxième faisceau lumineux diffracté 21 est donc ensuite incident avec le même angle d'incidence que le premier faisceau lumineux diffracté 11 sur la face de sortie 333 du prisme 330 qui le réfracte à son tour.

Le deuxième faisceau lumineux diffracté 21 se propage alors en direction du système optique de focalisation 140, de manière parallèle au premier faisceau lumineux diffracté 11.

De manière avantageuse, la face d'entrée 332 et la face de sortie 333 sont revêtues d'un traitement anti-reflet permettant, d'une part, de réduire les pertes par réflexion sur la face d'entrée 332 et sur la face de sortie 333, et, d'autre part, de limiter la formation de faisceaux lumineux parasites qui pourraient réduire la précision des mesures d'intensité lumineuse effectuées par les moyens de détection 150.

On a représenté sur la figure 4 une troisième variante du premier mode de réalisation du spectromètre 100 dans lequel le réseau de diffraction à séparation de polarisation 120 fonctionne également en transmission et dans lequel les moyens optiques de recombinaison 430 comportent une lame à retard 433, un premier miroir 431, un deuxième miroir 432, et un cube recombineur de polarisation 4340.

Par souci de clarté, on n'a représenté sur la figure 4 que les rayons lumineux à la longueur d'onde λ1.

La lame à retard 433 est disposée en sortie du réseau de diffraction à séparation de polarisation 120, parallèlement à celui-ci. La lame à retard 433 est de préférence située à une distance très proche du réseau de diffraction à séparation de polarisation 120, par exemple 1 millimètre, de sorte que la lame à retard 433 intercepte le premier faisceau lumineux diffracté 11 et le deuxième faisceau lumineux diffracté 21.

En variante, la lame à retard peut être accolée à la face de sortie du réseau de diffraction à séparation de polarisation de sorte qu'ils ne forment qu'un seul et unique composant optique.

La lame à retard 433 est une lame quart d'onde achromatique optimisée pour fonctionner au moins dans la gamme des longueurs d'onde du réseau de diffraction à séparation de polarisation 120.

De manière avantageuse, la lame à retard 433 présente une grande acceptance angulaire.

Cette lame à retard 433 modifie les états de polarisation respectifs du premier faisceau lumineux diffracté 11 et du deuxième faisceau lumineux diffracté 21 qui sont des états de polarisation circulaires et orthogonaux en entrée de la lame à retard 433, de sorte que :
- le premier état de polarisation soit transformé en un état de polarisation linéaire, et que
- le deuxième état de polarisation soit transformé en un état de polarisation linéaire orthogonal au premier état de polarisation, la lame à retard 433 conservant la propriété d'orthogonalité.

La lame à retard 433 est orientée de façon à ce que le premier état de polarisation à la sortie de cette lame à retard 433 corresponde à l'état de polarisation transmis par le cube recombineur de polarisation 4340 (voir ci-après) et à ce que le deuxième état de polarisation à la sortie de la lame à retard 433 corresponde à l'état de polarisation réfléchi par ce cube recombineur de polarisation 4340 (voir ci-après).

La lame à retard 433 ne dévie ici ni le premier faisceau lumineux diffracté 11, ni le deuxième faisceau lumineux diffracté 21.

Le deuxième miroir 432 des moyens optiques de recombinaison 430 est un miroir plan disposé ici perpendiculairement au plan d'incidence de la même manière par rapport au réseau de diffraction à séparation de polarisation 120 et à l'axe optique A1 que le miroir 130 plan du premier mode de réalisation.

Ce deuxième miroir 432 constitue, dans cette troisième variante, la surface plane de réflexion optique des moyens optiques de recombinaison 430.

Le premier miroir 431 est un miroir plan disposé parallèlement au deuxième miroir 432 pour lui faire face. Le premier miroir 431 est donc également perpendiculaire au réseau de diffraction à séparation de polarisation 120.

Ainsi disposés, on comprend que :
- le premier miroir 431 réfléchit, à la longueur d'onde λ1, le premier faisceau lumineux diffracté 11 à la longueur d'onde λ1, et que
- le deuxième miroir 432 réfléchit, à la même longueur d'onde λ1, le deuxième faisceau lumineux diffracté 21 à la longueur d'onde λ1.

Après réflexion sur le premier miroir 431 et sur le deuxième miroir 432, le premier faisceau lumineux diffracté 11 et le deuxième faisceau lumineux diffracté 21 demeurent symétriques par rapport à l'axe optique A1.

De plus, les réflexions sur le premier miroir 431 et sur le deuxième miroir 432 ne modifient pas le premier état de polarisation ni le deuxième état de polarisation qui demeurent des états de polarisation linéaires et orthogonaux entre eux.

Le cube recombineur de polarisation 4340 est placé entre le premier miroir 431 et le deuxième miroir 432 de sorte que :
- le premier faisceau lumineux diffracté 11 réfléchi par le premier miroir 431 soit incident selon un premier angle d'incidence sur une première face d'entrée 4341A du cube recombineur de polarisation 4340, le premier faisceau lumineux diffracté 11 étant transmis par cette première face d'entrée 4341A dans un premier prisme 4341, et que :
- le deuxième faisceau lumineux diffracté 21 réfléchi par le deuxième miroir 432 soit incident selon un deuxième angle d'incidence égal au premier angle d'incidence sur une deuxième face d'entrée 4342A du cube recombineur de polarisation 4340, le deuxième faisceau lumineux diffracté 21 étant transmis par cette deuxième face d'entrée 4342A dans un deuxième prisme 4342.

De manière avantageuse, et pour les mêmes raisons que précédemment, la première face d'entrée 4341A et la deuxième face d'entrée 4342A du cube recombineur de polarisation 4340 sont revêtues d'un traitement anti-reflet.

Le cube recombineur de polarisation 4340 est donc formé du premier prisme 4341 et du deuxième prisme 4342 identique qui sont tous les deux des prismes droits isocèles rectangles.

Le premier prisme 4341 comprend la face d'entrée 4341A du cube recombineur de polarisation 4340 et une face hypoténuse 4341B.

De même, le deuxième prisme 4342 comprend la face d'entrée 4342A du cube recombineur de polarisation 4340, une face hypoténuse 4342B, et une dernière face 4340A formant une face de sortie du cube recombineur de polarisation 4340.

Le premier prisme 4341 et le deuxième prisme 4342 sont accolés par leurs faces hypoténuses 4341B, 4342B au moyen d'une colle optique pour former une interface de recombinaison 4343 du cube recombineur de polarisation 4340.

Le premier prisme 4341 et le deuxième prisme 4342, qui sont ici identiques, sont en verre minéral, par exemple en verre de type BK7 et leurs faces hypoténuses 4341B, 4341B sont revêtues d'un filtre qui a pour fonction, pour les longueurs d'onde λ1 et λ2, de :
- transmettre les rayons lumineux qui sont incidents sur les faces hypoténuses 4341B, 4342B et qui sont polarisés linéairement, et de
- réfléchir les rayons lumineux qui sont incidents sur les faces hypoténuses 4341B, 4342B et qui sont polarisés linéairement et orthogonalement aux rayons lumineux transmis par ces faces hypoténuses 4341B, 4342B.

En particulier, le cube recombineur de polarisation 4340 est tel que :
- le premier faisceau lumineux diffracté 11, qui se propage dans le premier prisme 4341 selon un premier état de polarisation linéaire et qui est incident sur la face hypoténuse 4341B, au niveau de l'interface de recombinaison 4343, est transmis par l'interface de recombinaison 4343 ;
- le deuxième faisceau lumineux diffracté 21, qui se propage dans le deuxième prisme 4342 selon un deuxième état de polarisation linéaire, orthogonal au premier état de polarisation, et qui est incident sur la face hypoténuse 4341B, au niveau de l'interface de recombinaison 4343, est réfléchi par l'interface de recombinaison 4343.

Ainsi, comme le premier faisceau lumineux diffracté 11 et le deuxième faisceau lumineux diffracté 21 sont incidents avec le même angle d'incidence sur les faces d'entrée 4341A, 4342A du cube recombineur de polarisation 4340, après transmission du premier faisceau lumineux diffracté 11 et réflexion du deuxième faisceau lumineux diffracté 21 par l'interface de recombinaison 4343, le premier faisceau lumineux diffracté 11 et le deuxième faisceau lumineux diffracté 21 sont ici superposés et se propagent parallèlement dans le deuxième prisme 4342 pour être incidents, en incidence normale, sur la face de sortie 4340A du cube recombineur de polarisation 4340.

Transmis par cette face de sortie 4340A, le premier faisceau lumineux diffracté 11 et le deuxième faisceau lumineux diffracté 21 sont parallèles, et même ici superposés, en sortie du cube recombineur de polarisation 4340 et se propagent parallèlement en direction des moyens de focalisation 140.

Comme les premiers faisceaux lumineux diffractés et les deuxièmes faisceaux lumineux diffractés sont symétriques avant transmission ou réflexion par l'interface de recombinaison 4343 du cube recombineur de polarisation 4340 pour chaque longueur d'onde, ces faisceaux lumineux sont superposés et se propagent parallèlement en sortie du cube recombineur de polarisation 4340 à chaque longueur d'onde.

De manière avantageuse, et pour les mêmes raisons que précédemment, la face de sortie 4340A du cube recombineur de polarisation 4340 est également revêtue d'un traitement anti-reflet.

Grâce à la superposition du premier faisceau lumineux diffracté 11 et du deuxième faisceau lumineux diffracté 21 en sortie du cube recombineur de polarisation 4340, l'ouverture numérique de focalisation du système optique de focalisation peut être inférieure au double de l'ouverture numérique de collimation.

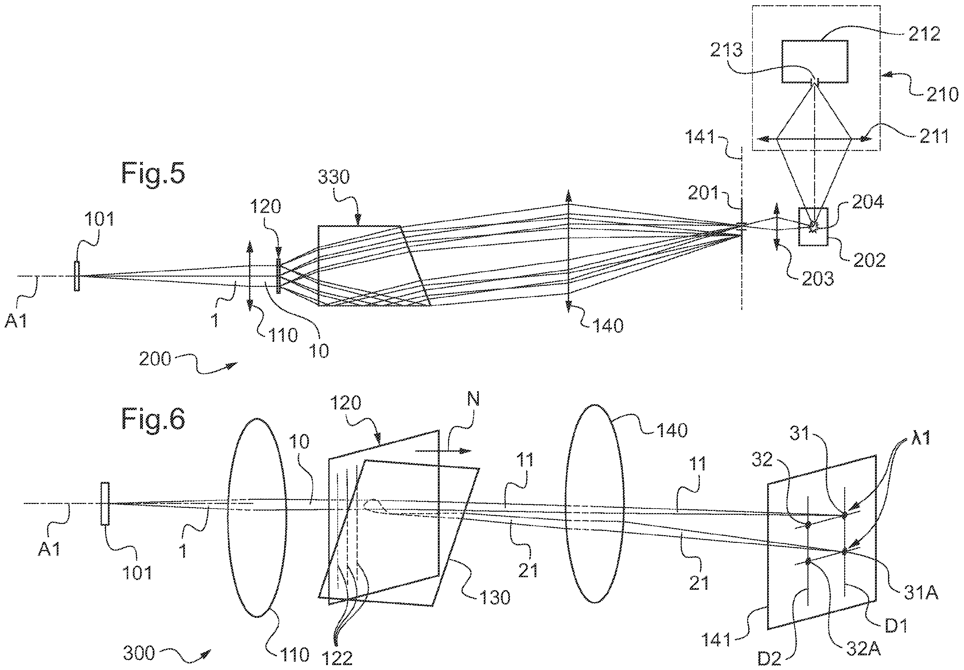

On a représenté sur la figure 5 un deuxième mode de réalisation d'un spectromètre 200.

Ce spectromètre 200 est similaire à la troisième variante du premier mode de réalisation représentée sur la figure 3, en ce sens qu'il comporte les éléments identiques suivants : la fente d'entrée 101, les moyens de collimation 110, les moyens de dispersion angulaire 120, les moyens optiques de recombinaison 330 et les moyens de focalisation 140.

En variante, le spectromètre selon ce deuxième mode de réalisation pourrait, par exemple comporter une fente d'entrée, des moyens de collimation, des moyens de dispersion angulaire, des moyens optiques de recombinaison et des moyens de focalisation identiques au premier mode de réalisation ou à ses variantes représentés sur les figures 1, 2, et 4.

Le spectromètre 200 comporte une fente de sortie 201 disposée sur la surface de focalisation 141 des moyens de focalisation 140, c'est-à-dire dans le plan de focalisation de la lentille de focalisation.

La fente de sortie 201 est ici mobile et peut être translatée dans le plan de focalisation 141 pour sélectionner une longueur d'onde particulière du spectre du faisceau lumineux amont 1.

Plus précisément, dans la configuration représentée sur la figure 5, la fente de sortie 201 est disposée dans le plan de focalisation de sorte qu'elle laisse traverser les faisceaux lumineux diffractés 11, 21 qui sont recombinés par les moyens de focalisation 140 dans le plan de focalisation.

En variante, la fente de sortie pourrait par exemple être fixe de sorte que, par construction, le spectromètre ne laisse passer qu'une seule et unique longueur d'onde déterminée par la position fixe de la fente de sortie.

Le spectromètre 200 comporte en outre une cellule de fluorescence 202 placée en aval de la fente de sortie 201, sur le chemin optique des faisceaux lumineux diffractés 11, 21.

Le spectromètre 200 comporte également une lentille imageuse 203 qui forme l'image de la fente de sortie 201 sur un volume d'étude 204 de la cellule de fluorescence 22 de sorte que cette cellule de fluorescence 202 est illuminée par les faisceaux lumineux diffractés 11, 21 traversant la fente de sortie 201.

La cellule de fluorescence 202 comprend ici une petite cuve en verre transparent contenant une solution d'un produit dont on cherche à mesurer le signal de fluorescence à une longueur d'onde d'excitation prédéfinie ou bien le spectre de fluorescence.

Lorsque la cellule de fluorescence 202, en particulier le volume d'étude 204, est illuminée par les faisceaux lumineux diffractés 11, 21 à la longueur d'onde λ1, ce volume d'étude 204 émet alors un signal de fluorescence dans toutes les directions, sur une bande de longueur d'onde allant de 300 nm à 1100 nm.

Ce signal de fluorescence est ensuite collecté par des moyens de mesure 210 qui mesurent l'intensité lumineuse du signal de fluorescence émis par la cellule de fluorescence 202.

À cet effet, les moyens de mesure 210 comportent un système optique de collection 211 du signal de fluorescence permettant de recueillir une partie du signal de fluorescence émis par la cellule de fluorescence 202.

Ce système optique de collection 211 présente ici un axe optique de collection A2 perpendiculaire à l'axe optique A1 du spectromètre 200.

Cette configuration permet de collecter le signal de fluorescence sans être gêné par les faisceaux lumineux diffractés 11, 21 incidents sur la cellule de fluorescence 202.

Les moyens de mesure 210 comportent également un deuxième spectromètre 212 muni d'une fente d'entrée de mesure 213.

Le système optique de collection 211 forme l'image du volume d'étude 204 de la cellule de fluorescence 202 dans le plan de la fente d'entrée de mesure 213.

Le deuxième spectromètre 212 mesure alors l'intensité lumineuse du signal de fluorescence émis par la cellule de fluorescence 202 en fonction de la longueur d'onde.

Les moyens de mesure 210 permettent ainsi d'analyser la réponse de la cellule de fluorescence 202 pour la longueur d'onde λ1.

On a représenté sur la figure 6 un troisième mode de réalisation d'un spectromètre 300 permettant en plus de déterminer l'état de polarisation du faisceau lumineux amont 1.

Ce spectromètre 300 de la figure 6 est similaire au premier mode de réalisation représentée sur la figure 1, en ce sens qu'il comporte les éléments identiques suivants : une fente d'entrée 101, un système optique de collimation 110, un réseau de diffraction à séparation de polarisation 120, un miroir 130 plan et une lentille de focalisation 140.

En variante, le spectromètre selon ce troisième mode de réalisation pourrait, par exemple comporter une fente d'entrée, des moyens de collimation, des moyens de dispersion angulaire, des moyens optiques de recombinaison et des moyens de focalisation identiques aux variantes du premier mode de réalisation représentées sur les figures 2 à 4.

Dans ce troisième mode de réalisation, et comme cela est bien représenté sur la figure 6, le miroir 130 est agencé et orienté par rapport au réseau de diffraction à séparation de polarisation 120 de manière à ce que la surface plane de réflexion optique, constituée par la surface réfléchissante du miroir 130, n'est pas parallèle aux traits 122 du réseau de diffraction à séparation de polarisation 120 mais forme avec ceux-ci un angle compris entre 0° et 90°.

Ainsi agencés, les moyens optiques de recombinaison 130 sont tels que le premier faisceau lumineux diffracté 11 et le deuxième faisceau lumineux diffracté 21 sont focalisés, pour la longueur d'onde λ1, par la lentille de focalisation 140 en deux points distincts de focalisation 31, 31A de la surface de focalisation 141.

Dans le plan de focalisation, les deux points distincts de focalisation 31, 31A sont alors séparés sur ladite surface de focalisation 141, et sont alignés selon une droite D1.

De la même manière, le premier faisceau lumineux diffracté 12 et le deuxième faisceau lumineux diffracté 22 (faisceaux non représentés) sont focalisés, pour la longueur d'onde λ2, par la lentille de focalisation 140 en deux points distincts de focalisation 32, 32A de la surface de focalisation 141, qui sont alignés selon une droite D2 du plan de focalisation, parallèle à la droite D1 pour la longueur d'onde λ1.

De plus, les points de focalisation 31, 31A à la longueur d'onde λ1 sont espacés le long de la droite D1 de la même distance que les points de focalisation 32, 32A à la longueur d'onde λ2 le long de la droite D2.

On considérera pour la suite que le premier faisceau lumineux diffracté 11 présente une première intensité I11 à la longueur d'onde λ1 et le deuxième faisceau lumineux diffracté 21 présente une deuxième intensité I21 à la longueur d'onde λ1.

Conformément à ce qui a été décrit précédemment, le réseau de diffraction à séparation de polarisation 120 est tel que le rapport entre les intensités respectives I11 et I21 des premier et deuxième faisceaux lumineux diffractés 11, 21 à la longueur d'onde λ1 est fonction de l'état de polarisation du faisceau lumineux amont 1 dans le plan de la fente d'entrée 101.

Il en est d'ailleurs également de même pour les premier et deuxième faisceaux lumineux diffractés 12,22 à la longueur d'onde λ2.

Ainsi, en plaçant des moyens de détection (non représentés) dans le plan de la surface de focalisation 141 de manière à mesurer séparément les intensités relatives des premier et deuxième faisceau lumineux diffractés 11, 21, 12, 22 pour chacune des longueurs d'onde contenu dans le spectre du faisceau lumineux amont 1, on peut non seulement déterminer le spectre du faisceau lumineux amont 1 pour les deux états propres de polarisation du réseau de diffraction à séparation de polarisation 120, mais surtout l'état de polarisation du faisceau lumineux amont 1 en fonction de la longueur d'onde. On réalise ainsi un spectropolarimètre.

De manière générale, le spectromètre de l'invention permet de recombiner les faisceaux diffractés par un réseau de diffraction à séparation de polarisation dans les ordres +1 et -1. En quelque sorte, le spectromètre de l'invention superpose les ordres de diffraction +1 et -1, permettant ainsi d'exploiter au mieux l'efficacité de diffraction d'un tel réseau.

De manière générale, le spectromètre selon l'invention présente une haute efficacité, proche de 100% sur une large bande spectrale, et ce indépendamment de l'état de polarisation du faisceau lumineux amont, celui-ci pouvant être polarisé ou non.

Une réalisation d'un spectromètre selon l'invention a montré, par rapport à un spectromètre standard mettant en oeuvre un réseau de diffraction classique, une amélioration de l'efficacité du spectromètre par un facteur multiplicatif compris entre deux et trois, pour différentes raies d'une lampe Hg-Ar sur la bande de longueurs d'onde comprises entre 500 nm et 760 nm.

## Revendications

1. Spectromètre (100 ; 200 ; 300) pour l'analyse du spectre d'un faisceau lumineux amont (1) comportant :
- une fente d'entrée (101) adaptée à laisser traverser ledit faisceau lumineux amont (1),
- des moyens de collimation (110) adaptés à générer, à partir dudit faisceau lumineux amont (1), un faisceau lumineux collimaté (10), et
- des moyens de dispersion angulaire (120) disposés de manière à intercepter ledit faisceau lumineux collimaté (10) et à disperser angulairement ledit faisceau lumineux collimaté (10) en fonction d'une pluralité de longueurs d'onde (λ1, λ2),
ledit spectromètre (100) étant **caractérisé en ce que** :
- lesdits moyens de dispersion angulaire (120) comprennent au moins un réseau de diffraction à séparation de polarisation qui présente une normale N au réseau, ledit réseau de diffraction à séparation de polarisation étant adapté à diffracter ledit faisceau lumineux collimaté (10) en :
- au moins un premier faisceau lumineux diffracté (11, 12) selon un premier ordre de diffraction qui est soit l'ordre de diffraction +1, soit l'ordre de diffraction -1 dudit réseau de diffraction à séparation de polarisation (120), ledit premier faisceau lumineux diffracté (11, 12) étant diffracté angulairement en fonction de ladite pluralité de longueurs d'onde (λ1, λ2) et présentant un premier état de polarisation qui est circulaire, et
- un deuxième faisceau lumineux diffracté (21, 22) selon un deuxième ordre de diffraction qui est soit l'ordre de diffraction +1, soit l'ordre de diffraction -1 dudit réseau de diffraction à séparation de polarisation, ledit deuxième ordre de diffraction étant différent dudit premier ordre de diffraction, ledit deuxième faisceau lumineux diffracté (21, 22) étant diffracté angulairement en fonction de ladite pluralité de longueurs d'onde (λ1, λ2) et présentant un deuxième état de polarisation qui est circulaire et orthogonal audit premier état de polarisation, et
**en ce qu'**il comporte :
- des moyens optiques de recombinaison (130 ; 330 ; 430) agencés au moins sur un trajet optique dudit deuxième faisceau lumineux diffracté (21, 22), en aval dudit réseau de diffraction à séparation de polarisation (120), lesdits moyens optiques de recombinaison (130 ; 330 ; 430) comprenant au moins une surface plane de réflexion optique (130 ; 331 ; 432) parallèle à ladite normale N au réseau qui est adaptée à dévier au moins ledit deuxième faisceau lumineux diffracté (21, 22), et
- des moyens de focalisation (140) adaptés pour focaliser, pour chaque longueur d'onde de ladite pluralité de longueurs d'onde (λ1, λ2), ledit premier faisceau lumineux diffracté (11, 12) et ledit deuxième faisceau lumineux diffracté (21, 22) sur une même surface de focalisation (141).

2. Spectromètre (100 ; 200 ; 300) selon la revendication 1 dans lequel ledit réseau de diffraction à séparation de polarisation (120) est plan et présente des traits (122) rectilignes et parallèles.

3. Spectromètre (100 ; 200) selon la revendication 2, dans lequel ladite surface plane de réflexion optique (130 ; 331 ; 432) est parallèle auxdits traits (122) du réseau de diffraction à séparation de polarisation (120), de sorte que ledit premier faisceau lumineux diffracté (11, 12) et ledit deuxième faisceau lumineux diffracté (21, 22) soient focalisés, pour chaque longueur d'onde de ladite pluralité de longueurs d'onde (λ1, λ2), par lesdits moyens de focalisation (140) en un même point de focalisation (31, 32) de ladite surface de focalisation (141), lesdits points de focalisation (31, 32) étant séparés sur ladite surface de focalisation (141) en fonction de ladite pluralité de longueurs d'onde (λ1, λ2).

4. Spectromètre (300) selon la revendication 2, dans lequel ladite surface plane de réflexion optique (130) forme avec lesdits traits (122) du réseau de diffraction à séparation de polarisation (120) un angle compris entre 0° et 90°, de sorte que ledit premier faisceau lumineux diffracté (11, 12) et ledit deuxième faisceau lumineux diffracté (21, 22) soient focalisés, pour chaque longueur d'onde de ladite pluralité de longueurs d'onde (λ1, λ2), par lesdits moyens de focalisation (140) en deux points distincts de focalisation (31, 31A, 32, 32A) de ladite surface de focalisation (141), lesdits deux points distincts de focalisation (31, 31A, 32, 32A) étant séparés sur ladite surface de focalisation (141).

5. Spectromètre (200) selon l'une des revendications 1 à 4, comportant une fente de sortie (201), fixe ou mobile, disposée sur ladite surface de focalisation (141) et adaptée à laisser traverser lesdits faisceaux lumineux diffractés (11, 21) recombinés par lesdits moyens de focalisation (140) sur ladite surface de focalisation (141).

6. Spectromètre (100) selon l'une des revendications 1 à 5, comportant des moyens de détection (150) disposés sur ladite surface de focalisation (141) et adaptés à délivrer, pour chaque longueur d'onde de ladite pluralité de longueurs d'onde (λ1, λ2), un signal relatif à la somme de l'intensité lumineuse diffractée à ladite longueur d'onde (λ1, λ2) dans l'ordre de diffraction +1 et de l'intensité lumineuse diffractée à ladite longueur d'onde (λ1, λ2) dans l'ordre de diffraction -1.

7. Spectromètre (100 ; 300) selon l'une des revendications 1 à 6, dans lequel lesdits moyens optiques de recombinaison (130) comportent un miroir plan disposé de manière à réfléchir, pour chaque longueur d'onde de ladite pluralité de longueurs d'onde (λ1, λ2), ledit deuxième faisceau lumineux diffracté (21, 22) dans une direction parallèle audit premier faisceau lumineux diffracté (11,12).

8. Spectromètre (100 ; 200) selon l'une des revendications 1 à 6, dans lequel lesdits moyens optiques de recombinaison (330) comportent un prisme comprenant une base (331), une face d'entrée (332) et une face de sortie (333) inclinée par rapport à la face d'entrée (332), ladite face d'entrée (332) et ladite face de sortie (333) réfractant, pour chaque longueur d'onde de ladite pluralité de longueurs d'onde (λ1, λ2), ledit premier faisceau lumineux diffracté (11, 12) et ledit deuxième faisceau lumineux diffracté (21, 22), ledit deuxième faisceau lumineux diffracté (21, 22) étant dévié, pour chaque longueur d'onde de ladite pluralité de longueurs d'onde (λ1, λ2), par réflexion sur ladite base (331) du prisme (330) entre ladite face d'entrée (332) et ladite face de sortie (333).

9. Spectromètre (100) selon l'une des revendications 1 à 6, dans lequel lesdits moyens optiques de recombinaison (430) comportent :
- une lame à retard (433) quart d'onde disposée en sortie dudit réseau de diffraction à séparation de polarisation (120), ladite lame à retard (433) quart d'onde étant adaptée à modifier ledit premier état de polarisation et ledit deuxième état de polarisation pour transformer leurs états de polarisation circulaires orthogonaux en des états de polarisation linéaires qui sont orthogonaux entre eux,
- un premier miroir (431) et un deuxième miroir (432) disposés parallèlement pour se faire face mutuellement et perpendiculairement audit réseau de diffraction à séparation de polarisation (120) de sorte que ledit premier miroir (431), respectivement ledit deuxième miroir (432), réfléchisse, pour chaque longueur d'onde de ladite pluralité de longueurs d'onde (λ1), ledit premier faisceau lumineux diffracté (11), respectivement ledit deuxième faisceau lumineux diffracté (21), et
- un cube recombineur de polarisation (4340) présentant une interface de recombinaison (4343) qui est placé entre ledit premier miroir (431) et ledit deuxième miroir (432) de sorte que ledit premier faisceau lumineux diffracté (11) réfléchi par ledit premier miroir (431) soit incident sur une première face d'entrée (4341A) dudit cube recombineur de polarisation (4340) et que ledit deuxième faisceau lumineux diffracté (21) réfléchi par ledit deuxième miroir (432) soit incident sur une deuxième face d'entrée (4342A) dudit cube recombineur de polarisation (4340), l'un desdits faisceaux lumineux diffractés (21) réfléchis étant réfléchi par ladite interface de recombinaison (4343) et l'autre faisceau lumineux diffracté (11) réfléchi étant transmis par ladite interface de recombinaison (4343), ledit premier faisceau lumineux diffracté (11) et ledit deuxième faisceau lumineux diffracté (21) étant parallèles en sortie dudit cube recombineur de polarisation (4340).

10. Spectromètre (100) selon l'une des revendications 1 à 8, dans lequel lesdits moyens de collimation (110) comprennent un système optique de collimation présentant une ouverture numérique de collimation et dans lequel lesdits moyens de focalisation (140) comprennent un système optique de focalisation présentant une ouverture numérique de focalisation qui est au moins égale au double de ladite ouverture numérique de collimation.

11. Spectromètre (100) selon la revendication 6 et l'une des revendications 7 à 10, dans lequel lesdits moyens de détection comportent un détecteur multi-canal.

12. Spectromètre selon la revendication 6 et l'une des revendications 7 à 10, dans lequel lesdits moyens de détection comportent une fente mobile et d'un détecteur mono-canal.

13. Spectromètre (200) selon la revendication 5 et l'une des revendications 7 à 10, comportant une cellule de fluorescence (202) et des moyens de mesure (210), ladite cellule de fluorescence (202) étant disposée en aval de ladite fente de sortie (201) de manière à être illuminée par lesdits faisceaux lumineux diffractés (11, 21) recombinés et à émettre un signal de fluorescence, lesdits moyens de mesure (210) étant adaptés à mesurer l'intensité lumineuse dudit signal de fluorescence.

## Patentansprüche

1. Spektrometer (100; 200; 300) zur Analyse des Spektrums eines davor befindlichen Lichtstrahls (1) mit:
- einem Eingangsschlitz (101), der dazu ausgelegt ist, den davor befindlichen Lichtstrahl (1) durchzulassen,
- Fokussiermitteln (110), die dazu ausgelegt sind, vom davor befindlichen Lichtstrahl (1) ausgehend, einen gebündelten Lichtstrahl (10) zu erzeugen, und
- Mitteln (120) zum winkelmäßigen Streuen, die so angeordnet sind, daß sie den gebündelten Lichtstrahl (10) einfangen und den gebündelten Lichtstrahl (10) in Abhängigkeit von einer Anzahl Wellenlängen (λ1, λ2) winkelmäßig streuen,
wobei das Spektrometer (100) **dadurch gekennzeichnet ist, daß**
- die Mittel (120) zum winkelmäßigen Streuen wenigstens ein Beugungsgitter mit Polarisationstrennung aufweisen, das eine Senkrechte N zum Gitter aufweist, wobei das Beugungsgitter mit Polarisationstrennung dazu ausgelegt ist, den gebündelten Lichtstrahl (10) in
- wenigstens einen ersten gebeugten Lichtstrahl (11, 12) gemäß einer ersten Beugungsordnung, die entweder die Beugungsordnung +1 oder die Beugungsordnung -1 des Beugungsgitters mit Polarisationstrennung (120) ist, wobei der erste gebeugte Lichtstrahl (11, 12) winkelmäßig in Abhängigkeit von der Anzahl Wellenlängen (λ1, λ2) gebeugt ist und einen ersten Polarisationszustand, und zwar einen kreisförmigen, aufweist, und
- einen zweiten gebeugten Lichtstrahl (21, 22) gemäß einer zweiten Beugungsordnung, die entweder die Beugungsordnung +1 oder die Beugungsordnung -1 des Beugungsgitters mit Polarisationstrennung ist, wobei die zweite Beugungsordnung von der ersten Beugungsordnung verschieden ist, wobei der zweite gebeugte Lichtstrahl (21, 22) winkelmäßig in Abhängigkeit von der Anzahl Wellenlängen (λ1, λ2) gebeugt ist und einen zweiten Polarisationszustand, und zwar einen kreisförmigen und zum ersten Polarisationszustand senkrechten, aufweist,
zu beugen,
und daß es
- optische Rekombinationsmittel (130; 330; 430) aufweist, die wenigstens auf einem optischen Pfad des zweiten gebeugten Lichtstrahls (21, 22) eingerichtet sind, nach dem Beugungsgitter mit Polarisationstrennung (120), wobei die optischen Rekombinationsmittel (130; 330; 430) wenigstens eine zur Senkrechten N zum Gitter parallele plane optische Reflexionsfläche (130; 331; 432) aufweisen, die dazu ausgelegt ist, wenigstens den zweiten gebeugten Lichtstrahl (21, 22) abzulenken, und
- Fokussierungsmittel (140), die dazu ausgelegt sind, den ersten gebeugten Lichtstrahl (11, 12) und den zweiten gebeugten Lichtstrahl (21, 22) für jede Wellenlänge der Anzahl Wellenlängen (λ1, λ2) auf eine selbe Fokussierungsfläche (141) zu fokussieren,
aufweist.

2. Spektrometer (100; 200; 300) gemäß Anspruch 1, bei dem das Beugungsgitter mit Polarisationstrennung (120) plan ist und gerade parallele Linien (122) aufweist.

3. Spektrometer (100; 200) gemäß Anspruch 1, bei dem die plane optische Reflexionsfläche (130; 331; 432) zu den Linien (122) des Beugungsgitters mit Polarisationstrennung (120) parallel ist, damit der erste gebeugte Lichtstrahl (11, 12) und der zweite gebeugte Lichtstrahl (21, 22) für jede Wellenlänge der Anzahl Wellenlängen (λ1, λ2) durch die Fokussierungsmittel (140) auf einen selben Fokussierungspunkt (31, 32) der Fokussierungsfläche (141) fokussiert werden, wobei die Fokussierungspunkte (31, 32) auf der Fokussierungsfläche (141) in Abhängigkeit von der Wellenlänge der Anzahl Wellenlängen (λ1, λ2) getrennt sind.

4. Spektrometer (100) gemäß Anspruch 1, bei dem die plane optische Reflexionsfläche (130; 331; 432) mit den Linien (122) des Beugungsgitters mit Polarisationstrennung (120) einen Winkel zwischen 0° und 90° einschließt, damit der erste gebeugte Lichtstrahl (11, 12) und der zweite gebeugte Lichtstrahl (21, 22) für jede Wellenlänge der Anzahl Wellenlängen (λ1, λ2) durch die Fokussierungsmittel (140) auf zwei getrennte Fokussierungspunkte (31, 31A, 32, 32A) der Fokussierungsfläche (141) fokussiert werden, wobei die beiden Fokussierungspunkte (31, 31A, 32, 32A) auf der Fokussierungsfläche (141) getrennt sind.

5. Spektrometer (200) gemäß einem der Ansprüche 1 bis 4, das einen festen oder beweglichen Ausgangsspalt (201) aufweist, der auf der Fokussierungsfläche (141) angeordnet ist und dazu ausgelegt ist, die durch die Fokussierungsmittel (140) rekombinierten gebeugten Lichtstrahlen (11, 21) auf die Fokussierungsfläche (141) durchzulassen.

6. Spektrometer (100) gemäß einem der Ansprüche 1 bis 5, das Erfassungsmittel (150) aufweist, die auf der Fokussierungsfläche (140) angeordnet sind und die dazu ausgelegt sind, für jede Wellenlänge der Anzahl Wellenlängen (λ1, λ2) ein Signal bezüglich der Summe der bei der Wellenlänge (λ1, λ2) gebeugten Lichtstärke in der Beugungsordnung +1 und bezüglich der Summe der bei der Wellenlänge (λ1, λ2) gebeugten Lichtstärke in der Beugungsordnung -1 abzugeben.

7. Spektrometer (100; 300) gemäß einem der Ansprüche 1 bis 6, bei dem die optischen Rekombinationsmittel (130) einen planen Spiegel aufweisen, der so angeordnet ist, daß er den zweiten gebeugten Lichtstrahl (21, 22) für jede Wellenlänge der Anzahl Wellenlängen (λ1, λ2) in eine zum ersten gebeugten Lichtstrahl (11, 12) parallele Richtung reflektiert.

8. Spektrometer (100; 200) gemäß einem der Ansprüche 1 bis 6, bei dem die optischen Rekombinationsmittel (330) ein Prisma mit einer Basis (331), einer Eingangsseite (332) und einer gegenüber der Eingangsseite (332) geneigten Ausgangsseite (333) aufweisen, wobei die Eingangsseite (332) und die Ausgangsseite (333) den ersten gebeugten Lichtstrahl (21, 22) für jede Wellenlänge der Anzahl Wellenlängen (λ1, λ2) beugen, wobei der zweite gebeugte Lichtstrahl (21, 22) für jede Wellenlänge der Anzahl Wellenlängen (λ1, λ2) zwischen der Eingangsseite (332) und der Ausgangsseite (333) durch Reflexion auf der Basis (331) des Prismas (330) abgelenkt wird.

9. Spektrometer (100) gemäß einem der Ansprüche 1 bis 6, bei dem die optischen Rekombinationsmittel (430)
- ein Plättchen (433) mit Viertelwellenverzögerung am Ausgang des Beugungsgitters mit Polarisationstrennung (120), wobei das Plättchen (433) mit Viertelwellenverzögerung dazu ausgelegt ist, den ersten Polarisationszustand und den zweiten Polarisationszustand zu ändern, um deren zueinander senkrechte kreisförmige Polarisationszustände in zueinander lineare Polarisationszustände umzuwandeln,
- einen ersten Spiegel (431) und einen zweiten Spiegel (432), die parallel angeordnet sind, um sich einander gegenüber und zum Beugungsgitter mit Polarisationstrennung (120) senkrecht zu stehen, damit der erste Spiegel (431) bzw. der zweite Spiegel (432) für jede Wellenlänge der Anzahl Wellenlängen (λ1, λ2) den ersten gebeugten Lichtstrahl (11) bzw. den zweiten gebeugten Lichtstrahl (21) reflektiert, und
- einen Rekombinationswürfel mit Polarisation (4340), der eine Rekombinationsschnittstelle (4343) aufweist, die zwischen dem ersten Spiegel (431) und dem zweiten Spiegel (432) angeordnet ist, damit der durch den ersten Spiegel (431) reflektierte erste gebeugte Lichtstrahl (11) auf eine erste Eingangsseite (4341A) des Rekombinationswürfels mit Polarisation (4340) fällt und damit der durch den zweiten Spiegel (432) reflektierte zweite gebeugte Lichtstrahl (21) auf eine zweite Eingangsseite (4342A) des Rekombinationswürfels mit Polarisation (4340) fällt, wobei einer der beiden reflektierten gebeugten Lichtstrahlen (21) durch die Rekombinationsschnittstelle (4343) reflektiert wird und der andere reflektierte gebeugte Lichtstrahl (11) durch die Rekombinationsschnittstelle (4343) übertragen wird, wobei der erste gebeugte Lichtstrahl (11) und der zweite gebeugte Lichtstrahl (21) am Ausgang des Rekombinationswürfels mit Polarisation (4340) parallel sind,
aufweisen.

10. Spektrometer (100) gemäß einem der Ansprüche 1 bis 8, bei dem die Fokussiermittel (110) ein optisches Bündelungssystem aufweisen, das eine digitale Bündelungsöffnung aufweist, und bei dem die Fokussiermittel (140) ein optisches Fokussiersystem aufweisen, das eine digitale Fokussieröffnung aufweist, das wenigstens gleich dem Doppelten der digitalen Bündelungsöffnung ist.

11. Spektrometer (100) gemäß Anspruch 6 und einem der Ansprüche 7 bis 10, bei dem die Erfassungsmittel einen Vielfachkanal-Detektor aufweisen.

12. Spektrometer (100) gemäß Anspruch 6 und einem der Ansprüche 7 bis 10, bei dem die Erfassungsmittel einen beweglichen Spalt und einen Vielfachkanal-Detektor aufweisen.

13. Spektrometer (100) gemäß Anspruch 5 und einem der Ansprüche 7 bis 10, das eine Fluoreszenzzelle (202) und Meßmittel (210) aufweist, wobei die Fluoreszenzzelle (202) nach dem Ausgangsspalt (201) angeordnet ist, um von den rekombinierten gebeugten Lichtstrahlen (11, 21) beleuchtet zu werden und ein Fluoreszenzsignal auszusenden, wobei die Meßmittel (210) dazu ausgelegt sind, die Lichtstärke des Fluoreszenzsignals zu messen.

## Claims

1. A spectrometer (100; 200; 300) for analysing the spectrum of an upstream light beam (1) including:
- an entrance slit (101) adapted to let said upstream light beam (1) through,
- collimation means (110) adapted to generate, from said upstream light beam (1), a collimated light beam (10), and
- angular dispersion means (120) arranged so as to intercept said collimated light beam (10) and to angularly disperse said collimated light beam (10) according to a plurality of wavelengths (λ1, λ2),
said spectrometer (100) being **characterized in that**:
- said angular dispersion means (120) comprise at least one polarization-separation diffraction grating that has a normal N to the grating, said polarization-separation diffraction grating being adapted to diffract said collimated light beam (10) into:
- at least one first diffracted light beam (11, 12) according to a first diffraction order that is either the diffraction order +1, or the diffraction order -1 of said polarization-separation diffraction grating (120), said first diffracted light beam (11, 12) being angularly diffracted according to said plurality of wavelengths (λ1, λ2) and having a first polarization state that is circular, and
- a second diffracted light beam (21, 22) according to a second diffraction order that is either the diffraction order +1, or the diffraction order -1 of said polarization-separation diffraction grating, said second diffraction order being different from said first diffraction order, said second diffracted light beam (21, 22) being angularly diffracted according to said plurality of wavelengths (λ1, λ2) and having a second polarization state that is circular and orthogonal to said first polarization state, and
**in that** it includes:
- optical recombination means (130; 330; 430) arranged at least on an optical path of said second diffracted light beam (21, 22), downstream of said polarization-separation diffraction grating (120), said optical recombination means (130; 330; 430) comprising at least one planar optical-reflection surface (130; 331; 432) parallel to said normal N to the grating that is adapted to deviate at least said second diffracted light beam (21, 22), and
- focussing means (140) adapted to focus, for each wavelength of said plurality of wavelength (λ1, λ2), said first diffracted light beam (11, 12) and said second diffracted light beam (21, 22) to a same focussing surface (141).

2. The spectrometer (100; 200; 300) according to claim 1, wherein said polarization-separation diffraction grating (120) is planar and has lines (122) that are rectilinear and parallel to each other.

3. The spectrometer (100; 200) according to claim 2, wherein said planar optical-reflection surface (130; 331; 432) is parallel to said lines (122) of the polarization-separation diffraction grating (120), so that said first diffracted light beam (11, 12) and said second diffracted light beam (21, 22) are focussed, for each wavelength of said plurality of wavelengths (λ1, λ2), by said focussing means (140) to a same focussing point (31, 32) of said focussing surface (141), said focussing points (31, 32) being separated on said focussing surface (141) according to said plurality of wavelengths (λ1, λ2).

4. The spectrometer (300) according to claim 2, wherein said planar optical-reflection surface (130) forms with said lines (122) of the polarization-separation diffraction grating (120) an angle comprised between 0° and 90°, so that said first diffracted light beam (11, 12) and said second diffracted light beam (21, 22) are focussed, for each wavelength of said plurality of wavelengths (λ1, λ2), by said focussing means (140) to two distinct focussing points (31, 31A, 32, 32A) of said focussing surface (141), said two distinct focussing points (31, 31A, 32, 32A) being separated on said focussing surface (141).

5. The spectrometer (200) according to anyone of claims 1 to 4, including an exit slit (201), fixed or mobile, arranged on said focussing surface (141) and adapted to let through said diffracted light beams (11, 21) recombined by said focussing means (140) on said focussing surface (141).

6. The spectrometer (200) according to anyone of claims 1 to 5, including detection means (150) arranged on said focussing surface (141) and adapted to deliver, for each wavelength of said plurality of wavelengths (λ1, λ2), a signal relating to the sum of the light intensity diffracted at said wavelength (λ1, λ2) in the diffraction order +1 and the light intensity diffracted at said wavelength (λ1, λ2) in the diffraction order -1.

7. The spectrometer (100; 300) according to anyone of claims 1 to 6, wherein said optical recombination means (130) include a planar mirror arranged so as to reflect, for each wavelength of said plurality of wavelengths (λ1, λ2), said second diffracted light beam (21, 22) in a direction parallel to said first diffracted light beam (11, 12).

8. The spectrometer (100; 200) according to anyone of claims 1 to 6, wherein said optical recombination means (330) include a prism comprising a base (331), an entrance face (332) and an exit face (333) inclined with respect to the entrance face (332), said entrance face (322) and said exit face (333) refracting, for each wavelength of said plurality of wavelengths (λ1, λ2), said first diffracted light beam (11, 12) and said second diffracted light beam (21, 22), said second diffracted light beam (21, 22) being deviated, for each wavelength of said plurality of wavelengths (λ1, λ2), by reflection on said base (331) of the prism (330) between said entrance face (332) and said exit face (333).

9. The spectrometer (100) according to anyone of claims 1 to 6, wherein said optical recombination means (430) include:
- a quarter-wave retardation plate (433) arranged at the exit of said polarization-separation diffraction grating (120), said quarter-wave retardation plate (433) being adapted to modify said first polarization state and said second polarization state to transform their orthogonal circular polarization states into linear polarization states that are orthogonal to each other,
- a first mirror (431) and a second mirror (432) arranged parallel to each other so as to face each other and perpendicular to said polarization-separation diffraction grating (120), so that said first mirror (431), respectively said second mirror (432), reflects, for each wavelength of said plurality of wavelengths (λ1), said first diffracted light beam (11), respectively said second diffracted light beam (21), and
- a polarization-recombining cube (4340) having a recombination interface (4343) that is placed between said first mirror (431) and said second mirror (432), so that said first diffracted light beam (11) reflected by said first mirror (431) is incident on a first entrance face (4341A) of said polarization-recombining cube (4340) and that said second diffracted light beam (21) reflected by said second mirror (432) is incident on a second entrance face (4342A) of said polarization-recombining cube (4340), one of said reflected diffracted light beams (21) being reflected by said recombination interface (4343) and the other reflected diffracted light beam (11) being transmitted by said recombination interface (4343), said first diffracted light beam (11) and said second diffracted light beam (21) being parallel at the exit of said polarization-recombining cube (4340).

10. The spectrometer (100) according to anyone of claims 1 to 8, wherein said collimation means (110) comprise an optical collimation system having a collimation numerical aperture and wherein said focussing means (140) comprise an optical focussing system having a focussing numerical aperture that is at least equal to the double of said collimation numerical aperture.

11. The spectrometer (100) according to claim 6 and to anyone of claims 7 to 10, wherein said detection means include a multi-channel detector.

12. The spectrometer according to claim 6 and anyone of claims 7 to 10, wherein said detection means include a mobile slit and a single-channel detector.

13. The spectrometer (200) according to claim 5 and to anyone of claims 7 to 10, including a fluorescence cell (202) and measurement means (210), said fluorescence cell (202) being arranged downstream of said exit slit (201) so as to be illuminated by said recombined diffracted light beams (11, 21) and to emit a fluorescence signal, said measurement means (210) being adapted to measure the light intensity of said fluorescence signal.
